# EUROPEAN PATENT APPLICATION

(11) **EP 0 641 946 A1**
(43) Date of publication of application: **08.03.1995**
(21) Application number: 93650029.7
(22) Date of filing: 23.08.1993
(51) Int. Cl.: F16D 3/84, A01B 71/08

(54) **Protective cover means for coupled drive shafts**

(71) Applicant: SANBURY LIMITED, Belmullet, Mayo (IE)
(72) Inventor: Fallon, John, Ballina, County Mayo (IE)
(74) Representative: Kelly, Peter F.

(57) **Abstract**

Driving machinery having a driving shaft (1) is coupled to driven machinery having a driven shaft (2) through a coupling arrangement (3) which permits the shafts to be non-aligned. To prevent persons and other articles touching the moving parts, there is a stationary safety means including a sleeve (5) having a concertina-like portion (5A) between a series of cylindrical portions (5B, 5C, 5D, 5E) of progressively decreasing diameter and a cylindrical portion (5H) of greater diameter having an internal flange (5M). Proceeding along the sleeve, the external diameters of the peaks of the ridges and the internal diameters of the bottoms of the troughs of the concertina-like portion (5A) at first progressively increase and then progressively decrease. At least one of the cylindrical portions (5B, 5C, 5D, 5E) may be cut off and the smallest of those remaining is clamped to a stationary guard tube (4) within which the driven shaft (2) rotates. The flange (5M) fits into a circular groove (16) in a collar (17) having flanges (7A) through which pass spigots (9) fixed to a plate (10). Clips (15) engage the free ends of the spigots (9). The plate (10) has holes (11) through which pass bolts fixing the plate to the driving machinery, these holes being elongate so that the same plate can be used with several differing kinds of driving machinery, having fixing bolts in differing places.

## Description

This invention relates to the coupling of a driven shaft to a driving shaft.

It is already known to couple a driven shaft, for example of agricultural machinery, to a driving shaft, for example of a tractor, using a coupling member which is coupled to the driven shaft in such a way that it can pivot in relation thereto about two intersecting and mutually perpendicular axes, the coupling member having a socket portion which can receive one end of a splined driving shaft, whereby the driving and driven shafts are coupled together for co-rotation about their respective axes of rotation which may be non-aligned on account of the nature of the coupling between the coupling member and the driven shaft.

It is an object of the present invention to reduce the risk of injury to personnel using apparatus in which a driven shaft is coupled by a coupling member to a driving shaft, the risk being on account of the possibility of the personnel or their clothing or articles held by them making contact with rotating parts.

According to a first aspect of the present invention, there is provided an assembly comprising driving machinery including a driving shaft, driven machinery including a driven shaft and a coupling arrangement coupling the two shafts to one another so as to allow their axes to be non-aligned, characterised by safety means which remain stationary when the shafts rotate and which include a cover tube within which the driven shaft rotates, a sleeve which is a single unitary body of flexible and resilient material having one end secured to the cover tube, at least part of the sleeve being concertina-like, a more rigid collar having one extremity thereof secured to the other end of the sleeve and having openings at an opposite extremity for fixing means, and a plate secured with the aid of said fixing means to said collar, the plate also being fixed to the driving machinery and for that purpose having through-going holes of elongate cross-section so as to receive fastening means at various locations both on said driving machinery and on differently constructed driving machinery.

According to a second aspect of the present invention, there is provided a kit of parts for use in making an assembly according to the first aspect of the invention, characterised in that the kit includes the sleeve, the collar and the plate and clamps for embracing the opposite ends of the sleeve and clamping them to the collar and the cover tube.

According to a third aspect of the present invention, there is provided a sleeve for use in guarding a coupling between driving and driven shafts, characterised in that the sleeve is a single unitary body of flexible and resilient material having a concertina-like portion at one end of which is a number of substantially cylindrical portions of progressively decreasing diameter leading to one end of the sleeve, at which there is a circular end opening, so that by cutting off an appropriate number of the substantially cylindrical portions the sleeve may be given any one of a predetermined range of internal diameters at that end of the sleeve and then may be clamped to any of a range of tubes of differing external diameters, the other end of the sleeve having a circular opening which is of greater diameter than the opposite end opening.

An assembly or a kit of parts according to the first or second aspect of the invention preferably includes a sleeve according to the third aspect of the invention.

The invention will be understood from the following description of an embodiment thereof, given by way of example only, with reference to the accompanying drawings, in which:-
Figure 1 shows a side view of a driven shaft coupled to a driving shaft by a coupling member, all three being embraced by a cover means;

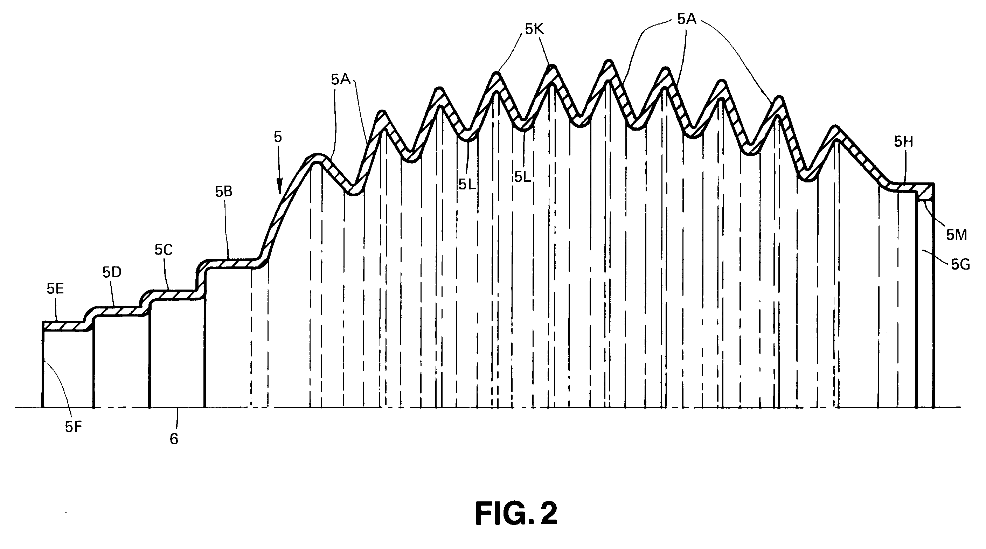

Figure 2 shows a longitudinal sectional view of half of a sleeve forming part of the cover means;

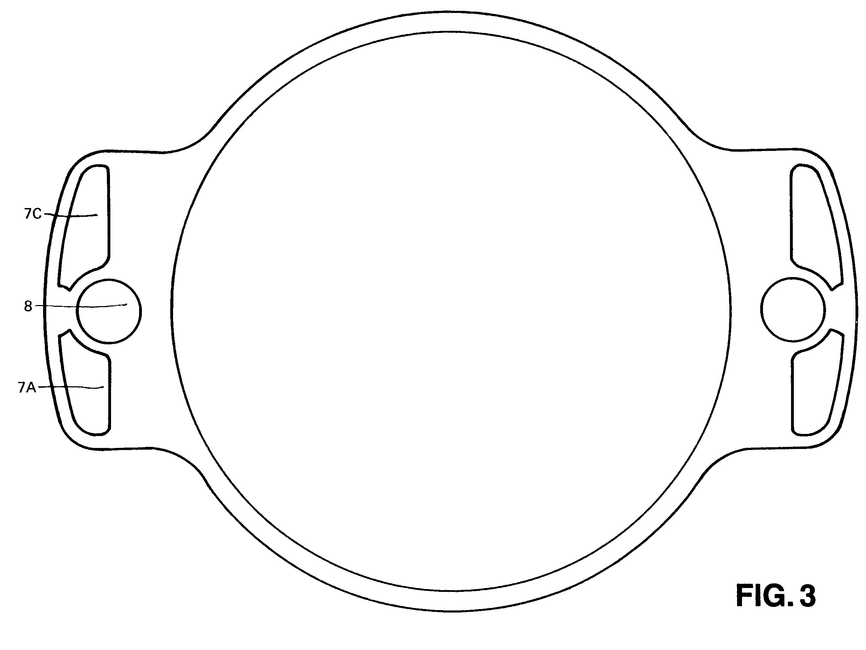

Figure 3 and 4 show views, taken as indicated by arrows III and IV, respectively, in Figure 1, of a collar and a plate, respectively, which are parts of the cover means; and
Figure 5 shows a clip.

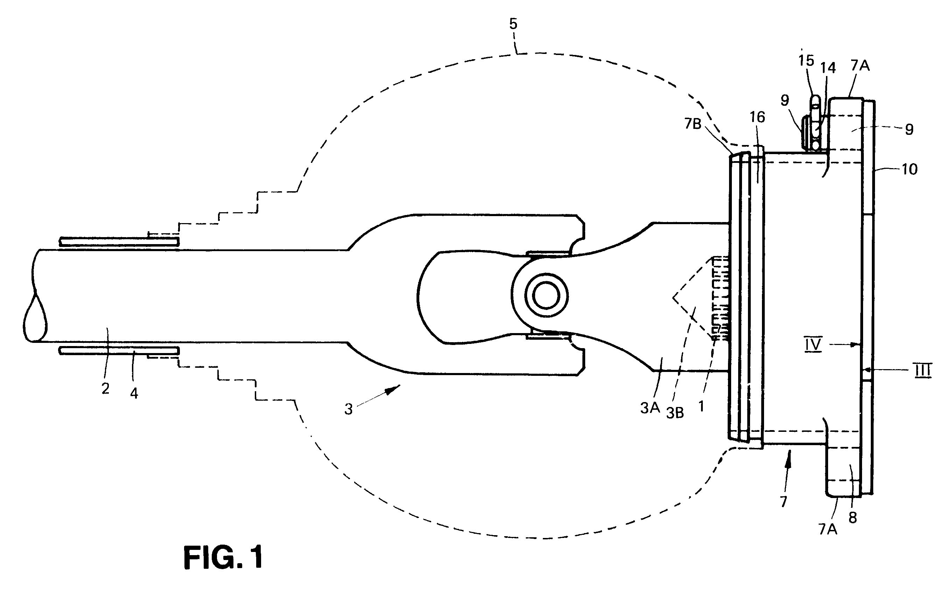

Figure 1 shows a driven shaft 2 of an agricultural machine (not shown) and a coupling arrangement 3 including a coupling member 3A which at one end is coupled to the driven shaft 2 in such a way that it can pivot in relation to the driven shaft about two axes which are perpendicular to one another and intersect one another. At its other end the coupling member 3A has a socket 3B which can receive one end of a splined driving shaft 1, which is the power take-off shaft of an agricultural tractor (not shown), the socket 3B having projections and recesses running along its inside such that rotation of the driving shaft 1 when its end is within the socket 3B causes the coupling member 3A and thus the driven shaft 2 to rotate. By virtue of the nature of the coupling of the coupling member 3A to the driven shaft 2, the axes of the shafts 1 and 2 can be non-aligned.

In order to protect persons using the agricultural machine from injury due to their coming into contact with the rotating parts, or their clothing or articles carried by them coming into contact with rotating parts, there is provided safety means which remain stationary when the shafts rotate.

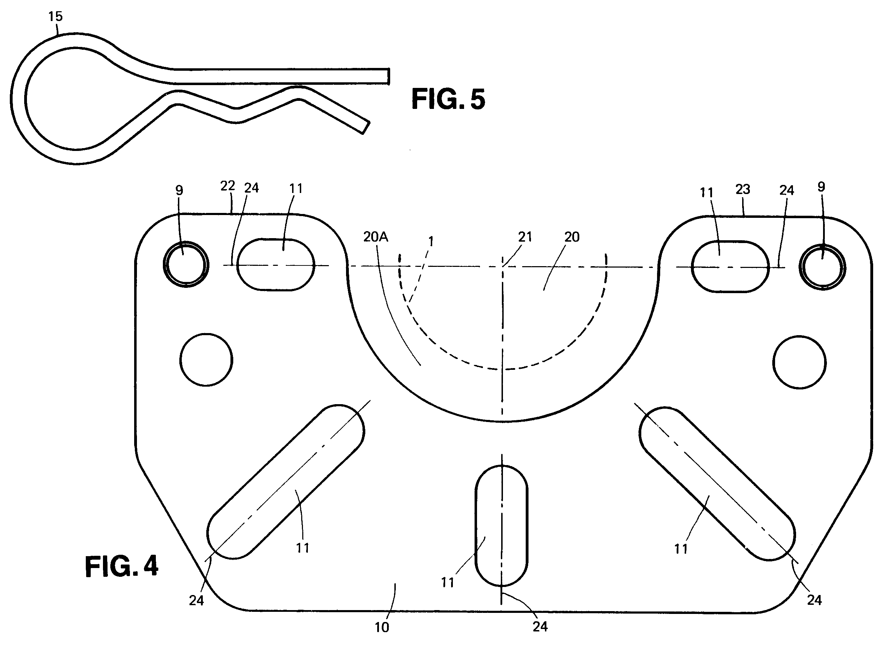

The safety means include a cover tube 4 within which the driven shaft 2 rotates, there being nylon bearings (not shown) between the shaft and the tube, a sleeve 5, shown only by dotted lines in Figure 1, having one end secured to the cover tube 4, and a collar 7 having one extremity thereof (the one shown to the left in Figure 1) secured to the other end of the sleeve. The sleeve is made of flexible and resilient material, for example a polychloroprene compound, and the collar is made of material, for example polypropylene, which is more rigid. At its right-hand extremity, the collar 7 has two outwardly directed flanges 7A (although it could instead have a single circular flange, for example), each formed with an opening 8, which in this example is a through-going hole, for fixing means 9, which in this example is a spigot having one end fixed to a plate 10. The plate 10 is fixed to the tractor and is so constructed that it can fit on any one of a range of differently constructed tractors, having fastening bolts at differing locations, for which purpose the plate has through-going holes 11 of elongate cross-section, as shown in Figure 4, for the fastening bolts to pass through.

The sleeve 5 is a single unitary moulding, symmetrical about its longitudinal axis 6 and having throughout a substantially uniform wall thickness of 3mm.. It has a concertina-like portion 5A at one end of which there are a number of substantially cylindrical portions, in this case four, 5B, 5C, 5D and 5E of progressively decreasing external diameter, the internal diameters being 100, 78, 66 and 55 mm., respectively, the latter dimension being the diameter of a circular opening 5F at the end of the sleeve. The sleeve may be clamped to a cover tube 4 of about 55mm. external diameter or, by cutting off the portion 5E, or the portions 5E and 5D, or the portions 5E, 5D and 5C, the sleeve may be made suitable for clamping to cover tubes 4 of about 66, 78 or 100 mm. external diameter.

At the opposite end 5H of the sleeve there is a circular end opening 5G, which is of greater diameter than the opposite end opening 5F, and the end 5H is cylindrical except for an inwardly-directed circular flange 5M, which fits into an annular groove 16 in the collar 7.

In the concertina-like portion 5A of the sleeve the peaks 5K of the ridges initially progressively increase in external diameter, proceeding along the sleeve from left to right, and then progressively decrease in diameter, i.e. 180, 210, 226, 237, 242, 245, 240, 232, 220 and 200 mm., and the bottoms 5L of the troughs likewise initially progressively increase and then decrease in internal diameter, i.e. 151, 174, 189, 196, 199, 197, 191, 179 and 161. The external diameter, 159 mm., of the end 5H is less than the diameter, 200 mm., of the nearest peak 5K.

To facilitate its insertion into the end 5H of the sleeve 5, the collar 7 is chamfered at 7B and its flanges 7A are formed with recesses 7C to save material and reduce the weight of the collar.

The plate 5 is, as shown in Figure 4, substantially in the form of a rectangle with a part 20 cut out, including the central portion 20A of one of its longer sides and a semi-circular portion 20B. The centre 21 of the circle of which the semi-circular portion 20B forms a part is lower than the two remaining parts 22 and 23 of the above-mentioned longer side when, as shown in Figure 4, the plate is vertical with said longer side uppermost. The holes 11 have centre lines 24 which are substantially radial with respect to the centre 21.

Each of the spigots 9 passes through and beyond one of the holes 8 in the flanges 7A on the collar 7 and has a portion 14 of reduced width near its end remote from the plate 10 to receive a clip 15, shown in Figure 5, for preventing the spigot 9 from coming out of the hole.

The ends 5E and 5H of the sleeve 5 may be embraced by Jubilee clips (not shown) to clamp them to the cover tube 4 and the collar 7, respectively. These two Jubilee clips, the two clips 15, the sleeve 5, the collar 7 and the plate 10 may be sold as a kit of parts and the customer may fit them to his own driving machinery and driven machinery. The provision of ridges on the sleeve 5 which decrease in diameter in both directions from approximately the centre of the concertina-like portion 5A, as opposed to the ridges having the same peak diameter throughout, facilitates distortion of the sleeve in order to fit it around the coupling and enables the angle between the two shafts 1 and 2 to be as great as, or nearly as great as, 90°.

When the plate 10 is fitted to the driving machinery, it may be in the orientation shown in Figure 4 or inverted. In both cases the driving shaft 1 passes through the cut-out portion 20 and the centre 21 lies substantially on the axis of the driving shaft.

The sleeve 5 could be wholly concertina-like in an assembly or a kit of parts according to the first or the second aspect of the invention.

## Claims

1. An assembly comprising driving machinery including a driving shaft (1), driven machinery including a driven shaft (2) and a coupling arrangement (3) coupling the two shafts to one another so as to allow their axes to be non-aligned, characterised by safety means which remain stationary when the shafts rotate and which include a cover tube (4) within which the driven shaft rotates, a sleeve (5) which is a single unitary body of flexible and resilient material having one end secured to the cover tube (4), at least part of the sleeve (5) being concertina-like, a more rigid collar (7) having one extremity thereof secured to the other end of the sleeve (5) and having openings (8) at an opposite extremity for fixing means (9), and a plate (10) secured with the aid of said fixing means (9) to said collar (7), the plate (10) also being fixed to the driving machinery and for that purpose having through-going holes (11) of elongate cross-section so as to receive fastening means at various locations both on said driving machinery and on differently constructed driving machinery.

2. A kit of parts for use in making an assembly according to claim 1, characterised in that the kit includes the sleeve (5), the collar (7) and the plate (10) and clamps for embracing the opposite ends of the sleeve (5) and clamping them to the collar (7) and the cover tube (4).

3. A sleeve (5) for use in guarding a coupling between driving and driven shafts, characterised in that the sleeve is a single unitary body of flexible and resilient material having a concertina-like portion (5A) at one end of which is a number of substantially cylindrical portions (5B, 5C, 5D, 5E) of progressively decreasing diameter leading to one end of the sleeve, at which there is a circular end opening (5F), so that by cutting off an appropriate number of the substantially cylindrical portions (5B, 5C, 5D, 5E) the sleeve may be given any one of a predetermined range of internal diameters at that end of the sleeve and then may be clamped to any of a range of tubes of differing external diameters, the other end (5H) of the sleeve having a circular opening (5G) which is of greater diameter than the opposite end opening (5F).

4. A sleeve according to claim 3, characterised in that, proceeding along the concertina-like portion (5A), the peaks (5K) of the ridges and the bottoms (5L) of the troughs firstly progressively increase in external and internal diameter, respectively, and then progressively decrease in external and internal diameter, and the external diameter of the sleeve at said other end (5H) is less than the external diameter of the nearest peak (5K).

5. A sleeve according to claim 3 or 4, characterised in that said other end (5H) of the sleeve (5) is cylindrical except for an inwardly-directed circular flange (5M).

6. An assembly or a kit of parts according to claim 1 or 2 characterised in that the sleeve (5) is in accordance with any one of claims 3 to 5.

7. An assembly or a kit of parts according to any one of claims 1, 2 and 6, characterised in that the openings (8) of the collar are holes which pass through outwardly-directed flanges (7A) on the collar and the fixing means (9) are spigots each fixed at one end of the plate (10) and each of which passes through and beyond a respective one of the holes (8).

8. An assembly or kit of parts according to claim 7, characterised in that each spigot (9) has a portion (14) of reduced width providing a recess near its end remote from the plate (10) and there is a clip (15) partly in this recess for preventing the spigot (9) from coming out of the corresponding hole (8).

9. An assembly or kit of parts according to any one of claims 6 to 8 in which the sleeve (5) is in accordance with claim 5, characterised in that the collar (7) has at said one extremity thereof an external groove (16) extending all round the collar to receive the circular flange (5M) of the sleeve (5).

10. An assembly or a kit of parts according to any one of claims 1, 2, 6, 7, 8 or 9, characterised in that the plate (10) has substantially the shape of a rectangle with a part (20) cut out including the central portion (20A) of one of its longer sides and a semi-circular portion (20B) the centre (21) of the circle being lower than the two remaining parts (22, 23) of that longer side when the plate is vertical with said longer side uppermost, said through-going holes (11) in the plate having centre-lines (24) which are substantially radial with respect to the centre (21) of the circle.
